# EUROPÄISCHE PATENTANMELDUNG

(11) **EP 1 980 443 A1**
(43) Veröffentlichungstag der Anmeldung: **15.10.2008**
(21) Anmeldenummer: 08154070.0
(22) Anmeldetag: 04.04.2008
(51) Int. Cl.: B60K 37/06, G05G 9/047, E02F 9/20

(54) **Bedienvorrichtung eines Fahrzeugs**

(30) Priorität: 11.04.2007 DE 102007017313; 21.04.2007 DE 102007018956
(71) Anmelder: Deere & Company, Moline, IL 61265-8098 (US)
(72) Erfinder: Hagner, Thorsten, 68549 Ilvesheim (DE); Blind, Alan, 69488 Birkenau (DE)
(74) Vertreter: Holst, Sönke

(57) **Zusammenfassung**

Die Erfindung betrifft eine Bedienvorrichtung (10) eines Fahrzeugs, mit mindestens einer Bedieneinheit (12) und mindestens einem Anzeigeelement (18), wobei die mindestens eine Bedieneinheit (12) zum Bedienen und/oder Ansteuern einer Fahrzeugfunktion oder einer Arbeitsfunktion vorgesehen ist, wobei das mindestens eine Anzeigeelement (18) der Bedieneinheit (12) zugeordnet ist und wobei das mindestens eine Anzeigeelement (18) zur Anzeige der mit der Bedieneinheit (12) ausführbaren Fahrzeugfunktion oder Arbeitsfunktion vorgesehen ist. Erfindungsgemäß ist die Bedienvorrichtung (10) dadurch gekennzeichnet, dass der Bedieneinheit (12) situationsabhängig mindestens zwei unterschiedliche Funktionsbelegungen zuweisbar sind, wodurch mit der Bedieneinheit (12) unterschiedliche Funktionen ansteuerbar sind, und dass das mindestens eine Anzeigeelement (18) eine veränderbare Anzeige aufweist, welche der aktuell vorliegenden situationsabhängig ausführbaren Fahrzeugfunktion oder Arbeitsfunktion zugeordnet ist.

## Beschreibung

Die Erfindung betrifft eine Bedienvorrichtung eines Fahrzeugs. Die Bedienvorrichtung umfasst mindestens eine Bedieneinheit und mindestens ein Anzeigeelement. Die mindestens eine Bedieneinheit ist zum Bedienen und/oder Ansteuern einer Fahrzeugfunktion oder einer Arbeitsfunktion vorgesehen. Das mindestens eine Anzeigeelement ist der Bedieneinheit zugeordnet. Das mindestens eine Anzeigeelement ist zur Anzeige der mit der Bedieneinheit ausführbaren Fahrzeugfunktion oder Arbeitsfunktion vorgesehen. Eine Arbeitsfunktion kann eine Funktion des Fahrzeugs selbst sein. Zusätzlich oder alternativ kann eine Arbeitsfunktion auch eine Funktion eines Arbeitsgeräts sein, welches reversibel an das Fahrzeug adaptierbar ist.

Bedienvorrichtungen der eingangs genannten Art sind seit langem aus dem Stand der Technik bekannt und werden insbesondere bei der Ansteuerung von Fahrzeugfunktionen oder Arbeitsfunktionen eingesetzt. Hierbei ist es üblich, dass eine Bedienvorrichtung eine Bedieneinheit aufweist, z.B. einen Steuerknüppel, einen Joystick, einen Schalthebel oder einen Drehschalter, mit welcher lediglich eine Funktion oder eine Funktionsgruppe des Fahrzeugs ansteuerbar ist. Eine Mehrfachbelegung der Bedieneinheit ist nicht vorgesehen, da das Risiko besteht, dass der Fahrzeugbediener die Bedieneinheit zur Ansteuerung einer ersten Funktion betätigen möchte, die Bedieneinheit jedoch in dem aktuellen Betriebszustand eine andere Funktion ansteuert und dann eine irrtümliche Bedienung erfolgt.

Daher wird derzeit für jede Funktionsgruppe eine eigene Bedieneinheit bzw. Bedienvorrichtung vorgesehen, so dass ein Bediener grundsätzlich die Bedieneinheit betätigt, welche stets die jeweilige Fahrzeugfunktion bzw. Arbeitsfunktion ansteuert.

Der vorliegenden Erfindung liegt daher die Aufgabe zugrunde, eine Bedienvorrichtung der eingangs genannten Art anzugeben und weiterzubilden, durch welche die vorgenannten Probleme überwunden werden. Insbesondere soll eine Bedienvorrichtung angegeben und weitergebildet werden, mit welcher situationsbedingt verschiedene bzw. unterschiedliche Fahrzeugfunktionen oder Arbeitsfunktionen angesteuert werden können.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist eine Bedienvorrichtung der eingangs genannten Art dadurch gekennzeichnet, dass der Bedieneinheit situationsabhängig mindestens zwei unterschiedliche Funktionsbelegungen zuweisbar sind, wodurch mit der Bedieneinheit unterschiedliche Funktionen ansteuerbar sind. Das mindestens eine Anzeigeelement weist eine veränderbare Anzeige auf, welche der aktuell vorliegenden situationsabhängig ausführbaren Fahrzeugfunktion oder Arbeitsfunktion zugeordnet ist.

Erfindungsgemäß ist zunächst erkannt worden, dass unterschiedliche Fahrzeugfunktionen bzw. Arbeitsfunktionen mit ein und derselben Bedieneinheit der erfindungsgemäßen Bedienvorrichtung angesteuert werden können, falls Anzeigeelemente vorgesehen sind, welche mit ihrer Anzeige auf die aktuell vorliegende situationsabhängig ausführbare Fahrzeugfunktion bzw. Arbeitsfunktion hinweisen und/oder auf diese Funktionsbelegung angepasst sind. So könnte ein Joystick vorgesehen sein, welcher mindestens ein Anzeigeelement aufweist. Dieses Anzeigeelement könnte ein Symbol oder eine Beschriftung derart aufweisen, dass einem Bediener ersichtlich ist, dass der Joystick aktuell zur Ansteuerung eines Frontladers dient. Das Fahrzeug könnte in diesem Beispiel in Form eines Traktors ausgebildet sein, an welchem einen Frontlader adaptiert ist. Falls nun ein Arbeitsgerät an das Fahrzeug bzw. an den Traktor adaptiert wird, beispielsweise eine Rundballenpresse, so könnten mit dem Joystick eine oder mehrere Arbeitsfunktionen der Rundballenpresse angesteuert werden. In diesem Fall könnte das Anzeigeelement ein Symbol oder eine Beschriftung derart aufweisen, dass einem Bediener ersichtlich ist, dass der Joystick aktuell zur Ansteuerung der Rundballenpresse dient. Daher kann mit einer erfindungsgemäßen Bedienvorrichtung lediglich ein und dieselbe Bedieneinheit zur Ansteuerung unterschiedlicher Fahrzeugfunktionen bzw. Arbeitsfunktionen genutzt werden, da der Bedieneinheit unterschiedliche Funktionsbelegungen zuweisbar sind und die aktuelle Funktionsbelegung mittels des Anzeigeelements mit einer veränderbaren Anzeige einem Bediener angezeigt bzw. zur Kenntnis gebracht wird. Eine Fehlbedienung der Bedieneinheit ist hierdurch weitgehend ausgeschlossen.

Wie bereits angedeutet, könnte die Bedieneinheit einen Steuerknüppel, einen Schalthebel, einen Joystick, einen Drehschalter oder einen Mehrfunktions-Tastschalter aufweisen.

Das mindestens eine Anzeigeelement könnte ein beleuchtetes Symbol oder eine beleuchtete Beschriftung aufweisen. Grundsätzlich wäre zusätzlich oder alternativ ein taktil dargestelltes Symbol oder eine taktile Beschriftung denkbar, wie dies bei Lesegeräten für Blinde zum Einsatz kommt.

Gemäß einer bevorzugten Ausführungsform ist bei einer aktuell vorliegenden situationsabhängigen Funktionsbelegung der Bedieneinheit jeweils ein der aktuell vorliegenden situationsabhängig ausführbaren Fahrzeugfunktion oder Arbeitsfunktion entsprechendes Symbol oder eine entsprechende Beschriftung anzeigbar. Bevorzugt ist vorgesehen, eine Beschriftung in unterschiedlichen Sprachen zu ermöglichen bzw. anzuzeigen, so dass die Beschriftung bedienerspezifisch oder durch den Fahrzeughersteller in einer landesspezifischen Sprache vorgebbar ist.

Das Anzeigeelement könnte ein LCD-Element (Liquid Crystal Device), ein TFT-Element (Thin Film Transistor) oder ein LED-Element (Light Emitting Diode) aufweisen. Gemäß einer besonders bevorzugten Ausführungsform weist das Anzeigeelement ein OLED-Element (Organic Light Emitting Diode) auf. Hierbei handelt es sich um ein Lichtquellenelement, welches in Form einer Folie ausgebildet sein kann und welches vereinzelt bei MP3-Spielern oder bei Mobiltelefonen verwendet wird.

Insbesondere wenn das Anzeigeelement ein OLED-Element aufweist, könnte vorgesehen sein, dass das in Form eines OLED-Elements ausgebildete Anzeigeelement großflächig an einer Oberfläche der Bedieneinheit angeordnet ist. In vergleichbarer Weise könnte das in Form eines OLED-Elements ausgebildete Anzeigeelement die Oberfläche der Bedieneinheit vollständig oder nahezu vollständig überdecken. Weiterhin ist es denkbar, dass an der Bedieneinheit mindestens ein Tast- oder Schaltelement angeordnet ist, welches ebenfalls von einem Teil des OLED-Elements überdeckt ist oder welches ein eigenes OLED-Element aufweist. Insoweit kann hierdurch beispielsweise die Oberfläche einer in Form eines Joysticks ausgebildeten Bedieneinheit nahezu vollständig mit einem oder mehreren OLED-Elementen ausgestattet sein. Hierdurch weist der Joystick nicht lediglich die Funktion einer Bedieneinheit, sondern zusätzlich auch eine Informations- und Anzeigefunktion auf.

Das Anzeigeelement könnte eine Schwarzweißdarstellung, eine Grauwertdarstellung und/oder eine Farbdarstellung aufweisen. Eine Farbdarstellung des Anzeigeelements wird bevorzugt.

Besonders bevorzugt ist das Anzeigeelement unmittelbar an der Bedieneinheit angeordnet. Insbesondere wenn die Bedieneinheit in Form eines Joysticks ausgebildet ist, könnte ein Anzeigeelement oder könnten mehrere Anzeigeelemente unmittelbar an dem Joystick angeordnet sein, beispielsweise in einem oberen Bereich des Joysticks. So könnten vier Anzeigeeinheiten an dem Joystick vorgesehen sein, welche dem Bediener anzeigen, welche Funktion mit dem Joystick angesteuert wird, falls diese nach vorne oder nach hinten, nach links oder nach rechts ausgelenkt wird. Das Anzeigeelement könnte mittelbar der Bedieneinheit zugeordnet sein, falls die Bedieneinheit in Form eines Drehschalters ausgebildet ist und das Anzeigeelement bzw. die Anzeigeelemente an einem äußeren Bereich des Drehschalters ortsfest entsprechend unterschiedlicher Rastpositionen des Drehschalters angeordnet sind. Somit ist für den Bediener ersichtlich, welche Funktion - symbolisiert durch das jeweilige Anzeigeelement - an dem Drehschalter aktuell eingestellt bzw. angesteuert ist.

Gemäß einer bevorzugten Ausführungsform weist das Anzeigeelement ein Tast- oder Schaltelement auf. So könnte ein einen Tastschalter aufweisendes Anzeigeelement an einem Joystick angeordnet sein und eine Hydraulikfunktion eines Frontladers ansteuern, beispielsweise das Verbringen der Laderschaufel in eine vorgebbare Transportposition. Hierzu wird ein entsprechendes Symbol von der Anzeigeeinheit angezeigt. Falls eine Rundballenpresse an das Fahrzeug adaptiert wird, könnte mit demselben Tastschalter der Auswerfmechanismus der Rundballen angesteuert werden. In diesem Fall wird von dem Anzeigeelement des Tastschalters ein entsprechendes Symbol angezeigt.

Die Fahrzeugfunktion könnte eine oder mehrere Funktionen des Getriebemanagements und/oder der Fahrzeugbeleuchtung und/oder des Motormanagements aufweisen.

Die mindestens eine Arbeitsfunktion könnte die eines an das Fahrzeug reversibel adaptierbaren Arbeitsgeräts aufweisen. Hierzu sind bereits im vorangegangenen Teil der Beschreibung Ausführungen gemacht worden, auf welche verwiesen wird.

Das Arbeitsgerät könnte einen Frontlader, eine Rundballenpresse, ein Mähwerk, eine Sämaschine, eine Spritze, einen Pflug, eine Egge oder ein sonstiges landwirtschaftliches Arbeitsgerät aufweisen. Es könnte sich auch um ein Arbeitsgerät betreffend eine kommunale Arbeitsfunktion handeln.

Die Arbeitsfunktion des Fahrzeugs könnte eine hydraulische, eine elektrische und/oder eine pneumatische Funktion aufweisen. Falls das Fahrzeug in Form eines Traktors ausgebildet ist, könnte die Arbeitsfunktion die Hydraulik-Hubzylinder des Dreipunkt-Geräteanbaus umfassen.

Besonders bevorzugt ist die situationsbedingte Anzeige des Anzeigeelements automatisch umschaltbar. Insbesondere wenn an ein in Form eines Traktors ausgebildetes Fahrzeug ein Arbeitsgerät adaptiert wird, welches über einen so genannten ISO-Bus (ISO 11783) angesteuert wird, könnte vorgesehen sein, dass das Anzeigeelement automatisch mindestens ein Symbol oder mindestens eine Beschriftung anzeigt, welche die Funktionalität des Arbeitsgeräts betrifft. Sobald diese angezeigt wird, könnte mit der Bedieneinheit auch unmittelbar das Arbeitsgerät angesteuert werden. Es könnte jedoch auch vorgesehen sein, dass die situationsbedingte Anzeige des Anzeigeelements manuell mittels eines Umschaltelements umschaltbar ist. Mit einem solchen Umschaltelement könnte beispielsweise die Bedieneinheit zwischen einer Ansteuerung der Fahrzeugbeleuchtung und des Motormanagements umgeschaltet werden. Sobald das Umschaltelement betätigt ist, könnte das Anzeigeelement entsprechend ein Symbol oder eine Beschriftung der jeweiligen Fahrzeug- oder Arbeitsfunktion anzeigen. Falls ein automatischer oder manueller Umschaltvorgang vorliegt, könnte ein akustisches Signal ausgegeben werden, damit der Fahrzeugbediener die Umschaltung und die neue Funktionsbelegung der Bedieneinheit zur Kenntnis nehmen kann.

Es könnte eine Steuereinheit vorgesehen sein, welche das Anzeigeelement oder die Anzeigeelemente ansteuert. In gleicher Weise könnten die von der Bedieneinheit erzeugten Signale, welche durch Betätigung des Bedieners erzeugt werden, durch die Steuereinheit der jeweiligen Fahrzeugfunktion bzw. Arbeitsfunktion zugeleitet werden.

Gemäß einer bevorzugten Ausführungsform ist die Anzeigeeinheit mit Symbolen oder Schriftzeichen individuell und/oder bedienerspezifisch belegbar. Vorzugsweise ist eine solche Belegung abspeicherbar und wieder aufrufbar. Eine bedienerspezifische Belegung der von der Anzeigeeinheit dargestellten Symbole oder Schriftzeichen kann zum Einrichten einer an den Bediener angepassten Arbeitsumgebung dienen, wodurch die individuelle Produktivität gesteigert werden kann. Eine abgespeicherte Konfiguration könnte automatisch anhand einer Benutzeridentifizierung, z.B. durch einen Schlüssel oder mittels einer Identifikationskarte des Bedieners, wieder aufgerufen werden.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnungen zu verweisen. In Verbindung mit der Erläuterung der bevorzugten Ausführungsbeispiele der Erfindung anhand der Zeichnungen werden auch im Allgemeinen bevorzugte Ausgestaltungen und Weiterbildungen der Lehre erläutert. In den Zeichnungen zeigen jeweils in einer schematischen Darstellung
- Fig. 1: ein erstes Ausführungsbeispiel einer erfindungsgemäßen Bedienvorrichtung,
- Fig. 2: ein zweites Ausführungsbeispiel einer erfindungsgemäßen Bedienvorrichtung,
- Fig. 3a: ein erstes Ausführungsbeispiel der von einem Anzeigeelement darstellbaren Symbole bei einer ersten Funktionsbelegung, und
- Fig. 3b: ein zweites Ausführungsbeispiel der von einem Anzeigeelement darstellbaren Symbole bei einer zweiten Funktionsbelegung.

Gleiche oder ähnliche Bauteile sind in den Figuren mit denselben Bezugszeichen gekennzeichnet.

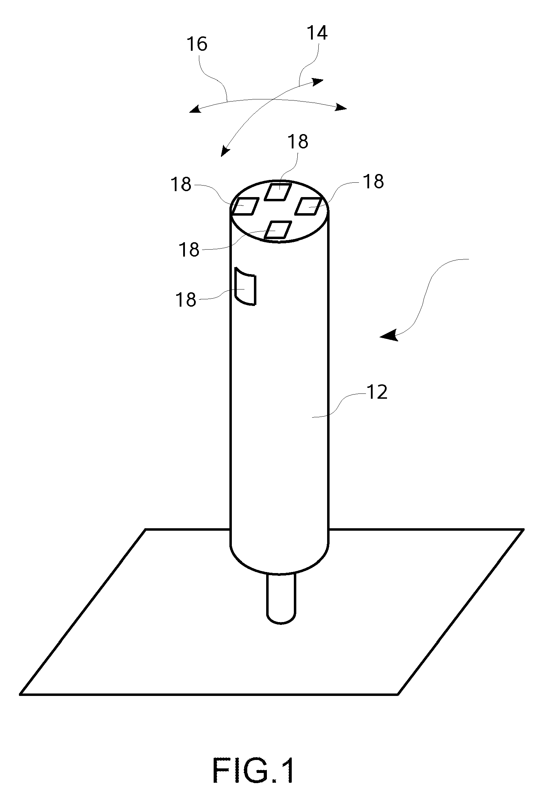

Fig. 1 zeigt eine Bedienvorrichtung 10 eines Fahrzeugs, wobei das Fahrzeug in Form eines Traktors (nicht gezeigt) ausgebildet ist. Die Bedienvorrichtung 10 umfasst eine Bedieneinheit 12, welche in Form eines Joysticks ausgebildet ist und in zwei voneinander unabhängige Richtungen 14, 16 sowie Kombinationen hierzu auslenkbar ist. Entlang der Richtung 14 ist der Joystick bzw. die Bedieneinheit 12 nach vorne oder nach hinten auslenkbar. Entlang der Richtung 16 ist die Bedieneinheit 12 nach links oder rechts auslenkbar. Die Bedieneinheit 12 gemäß Fig. 1 dient zum Ansteuern eines an den Traktor adaptierten Frontladers (nicht gezeigt). Wird die Bedieneinheit 12 nach vorne bzw. nach hinten ausgelenkt, so wird der Ausleger des Frontladers abgesenkt bzw. angehoben. Wird die Bedieneinheit 12 nach links bzw. nach rechts ausgelenkt, so wird die Laderschaufel nach unten bzw. nach oben verkippt. Der Bedieneinheit 12 sind vier Anzeigeelemente 18 zugeordnet, welche in einem oberen Bereich der Bedieneinheit 12 angeordnet sind. Sie dienen zur Anzeige der mit der Bedieneinheit 12 ausführbaren Frontladerfunktion. Somit werden entsprechende Symbole (in Fig. 1 nicht gezeigt) von den Anzeigeelementen 18 dargestellt. An dem Zylindermantelteil der Bedieneinheit 12 ist ein weiteres Anzeigeelement 18 angeordnet, welches als Tastschalter ausgebildet ist. Dieser Tastschalter kann mit dem Daumen des Bedieners betätigt werden. Diesem Tastschalter können ebenfalls situationsabhängig mindestens zwei unterschiedliche Funktionsbelegungen zugewiesen werden, so dass mit der Bedieneinheit 12 bzw. mit dem Tastschalter unterschiedliche Funktionen angesteuert werden können. In Abhängigkeit der jeweils zugewiesenen Funktion des Tastschalters wird an der Anzeigeeinheit 18 des Tastschalters ein entsprechendes Symbol oder eine entsprechende Beschriftung dargestellt, so dass ein Bediener erkennen kann, welche Funktion er mit dem Tastschalter ansteuert, falls er den Tastschalter betätigt.

Falls nun an den Traktor ein Arbeitsgerät (nicht gezeigt) adaptiert wird, welches über den ISO-Bus ansteuerbar ist, so ist vorgesehen, dass die Bedieneinheit 12 zur Ansteuerung des Arbeitsgeräts genutzt werden kann. Hierzu wird in erfindungsgemäßer Weise die Bedieneinheit 12 situationsabhängig mit einer unterschiedlichen Funktionsbelegung versehen, nämlich mit der Ansteuerung des Arbeitsgeräts anstelle des Frontladers. In diesem Fall zeigen die Anzeigeelemente 18 an der Bedieneinheit 12 jeweils andere Symbole an, nämlich Symbole, welche der aktuell vorliegenden situationsabhängig ausführbaren Arbeitsfunktion des Arbeitsgeräts zugeordnet sind. Die Anzeigeelemente 18 weisen jeweils ein OLED-Element auf und sind selbstleuchtende Lichtquellen mit einer symbolischen Farbdarstellung.

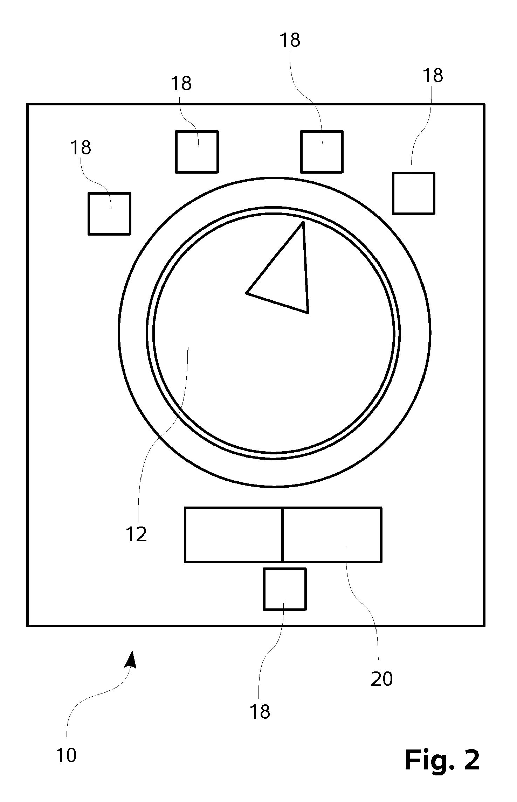

Fig. 2 zeigt ein zweites Ausführungsbeispiel einer erfindungsgemäßen Bedienvorrichtung 10. Die Bedienvorrichtung 10 weist eine in Form eines Drehschalters ausgebildete Bedieneinheit 12 auf. Der Drehschalter hat in Fig. 2 vier verschiedene Drehpositionen. Jede Drehposition ist mit einem unmittelbar an der Bedieneinheit 12 angeordneten Anzeigeelement 18 versehen, nämlich am gehäusefesten äußeren Teil der Bedieneinheit 12. Die Anzeigeelemente 18 in Fig. 1 und 2 sind schematisch angedeutet. In diesen Darstellungen sind keine Symbole oder Beschriftungen gezeigt. Die Bedienvorrichtung 10 weist ein Umschaltelement 20 auf, welches in Form eines Wipp- bzw. Kippschalters ausgebildet ist. Der Wippschalter weist einen neutralen Betriebszustand auf. Durch Drücken der linken Tastschalterfläche wird ein erstes Umschaltsignal erzeugt und einer (nicht gezeigten) Steuereinheit zugeleitet. Durch Drücken der rechten Tastschalterfläche wird ein zweites Umschaltsignal erzeugt, welches der Steuereinheit zugeleitet wird. Unmittelbar unterhalb des Umschaltelements 20 ist ebenfalls eine Anzeigeeinheit 18 vorgesehen, welche den jeweils eingestellten Zustand des Umschaltelements 20 anzeigt. Diese Anzeigeeinheit 18 könnte auch unmittelbar auf dem Umschaltelement 20 angeordnet sein. In Abhängigkeit des jeweils eingestellten Zustands des Umschaltelements 20 wird die Bedieneinheit 12 mit einer entsprechenden Funktionsbelegung belegt. Dementsprechend zeigen die vier Anzeigeeinheiten 18 an der Bedieneinheit 12 bzw. am Drehschalter jeweils unterschiedliche Symbole an. Die angezeigten Symbole entsprechen der jeweiligen Funktionsbelegung der Drehposition der Bedieneinheit 12.

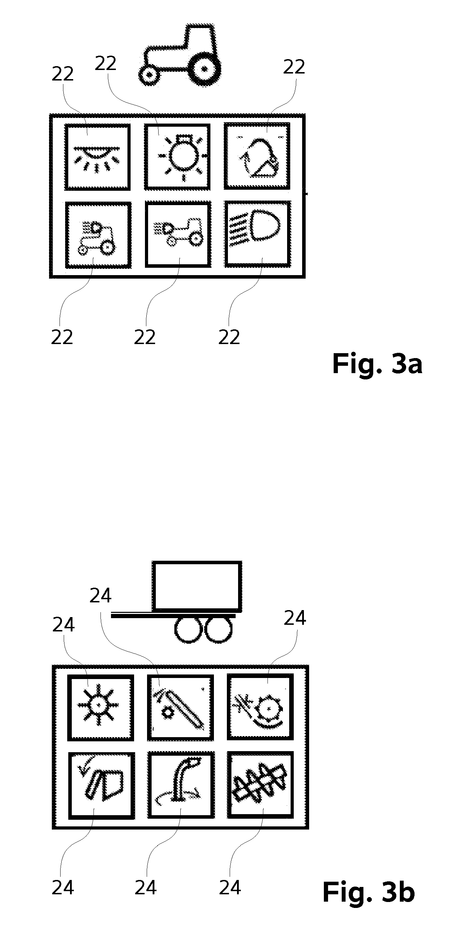

Fig. 3a zeigt in einer schematischen Darstellung sechs unterschiedliche Symbole 22, welche an einem Anzeigeelement 18 anzeigbar sein könnten, falls die entsprechende Bedienvorrichtung 10 eine erste Funktionsbelegung aufweist, welche sich auf das Fahrzeug bzw. den Traktor beziehen. In Fig. 3b sind in einer schematischen Darstellung sechs unterschiedliche Symbole 24 gezeigt, welche an einem Anzeigeelement 18 anzeigbar sein könnten, falls die entsprechende Bedienvorrichtung 10 eine zweite Funktionsbelegung aufweist, welche sich auf ein Arbeitsgerät bezieht, welches an das Fahrzeug bzw. den Traktor adaptierbar ist.

Abschließend sei besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Bedienvorrichtung eines Fahrzeugs, mit mindestens einer Bedieneinheit (12) und mindestens einem Anzeigeelement (18), wobei die mindestens eine Bedieneinheit (12) zum Bedienen und/oder Ansteuern einer Fahrzeugfunktion oder einer Arbeitsfunktion vorgesehen ist, wobei das mindestens eine Anzeigeelement (18) der Bedieneinheit (12) zugeordnet ist und wobei das mindestens eine Anzeigeelement (18) zur Anzeige der mit der Bedieneinheit (12) ausführbaren Fahrzeugfunktion oder Arbeitsfunktion vorgesehen ist, **dadurch gekennzeichnet, dass** der Bedieneinheit (12) situationsabhängig mindestens zwei unterschiedliche Funktionsbelegungen zuweisbar sind, wodurch mit der Bedieneinheit (12) unterschiedliche Funktionen ansteuerbar sind, und dass das mindestens eine Anzeigeelement (18) eine veränderbare Anzeige aufweist, welche der aktuell vorliegenden situationsabhängig ausführbaren Fahrzeugfunktion oder Arbeitsfunktion zugeordnet ist.

2. Bedienvorrichtung nach Anspruch 1, **dadurch gekennzeichnet, dass** die Bedieneinheit (12) einen Schalthebel, einen Joystick, einen Drehschalter oder einen Mehrfunktions-Tastschalter aufweist.

3. Bedienvorrichtung nach Anspruch 1 oder 2, **dadurch gekennzeichnet, dass** das mindestens eine Anzeigeelement (18) ein beleuchtetes Symbol oder eine beleuchtete Beschriftung aufweist.

4. Bedienvorrichtung nach Anspruch 3, **dadurch gekennzeichnet, dass** bei einer aktuell vorliegenden situationsabhängigen Funktionsbelegung der Bedieneinheit (12) jeweils ein der aktuell vorliegenden situationsabhängig ausführbaren Fahrzeugfunktion oder Arbeitsfunktion entsprechendes Symbol (22, 24) oder eine entsprechende Beschriftung, vorzugsweise in einer vorgebbaren Sprache, anzeigbar ist.

5. Bedienvorrichtung nach Anspruch 3 oder 4, **dadurch gekennzeichnet, dass** das Anzeigeelement (18) ein LCD-Element, ein TFT-Element, ein LED-Element oder ein OLED-Element aufweist.

6. Bedienvorrichtung nach Anspruch 5, **dadurch gekennzeichnet, dass** ein ein OLED-Element aufweisendes Anzeigeelement (18) großflächig an einer Oberfläche der Bedieneinheit (12) angeordnet ist oder dass ein ein OLED-Element aufweisendes Anzeigeelement (18) die Oberfläche der Bedieneinheit (12) vollständig überdeckt.

7. Bedienvorrichtung nach einem der Ansprüche 1 bis 6, **dadurch gekennzeichnet, dass** das Anzeigeelement (18) eine Schwarzweißdarstellung, eine Grauwertdarstellung und/oder eine Farbdarstellung aufweist.

8. Bedienvorrichtung nach einem der Ansprüche 1 bis 7, **dadurch gekennzeichnet, dass** das Anzeigeelement (18) unmittelbar an der Bedieneinheit (12) angeordnet ist und/oder dass das Anzeigeelement (18) mittelbar der Bedieneinheit (12) zugeordnet ist.

9. Bedienvorrichtung nach einem der Ansprüche 1 bis 8, **dadurch gekennzeichnet, dass** das Anzeigeelement (18) ein Tast- oder Schaltelement aufweist.

10. Bedienvorrichtung nach einem der Ansprüche 1 bis 9, **dadurch gekennzeichnet, dass** die Fahrzeugfunktion das Getriebemanagement und/oder die Fahrzeugbeleuchtung und/oder das Motormanagement aufweist.

11. Bedienvorrichtung nach einem der Ansprüche 1 bis 10, **dadurch gekennzeichnet, dass** die mindestens eine Arbeitsfunktion die eines an das Fahrzeug reversibel adaptierbaren Arbeitsgeräts aufweist.

12. Bedienvorrichtung nach Anspruch 11, **dadurch gekennzeichnet, dass** das Arbeitsgerät einen Frontlader, eine Rundballenpresse, ein Mähwerk, eine Sämaschine, eine Spritze, einen Pflug, eine Egge oder ein sonstiges landwirtschaftliches Arbeitsgerät aufweist.

13. Bedienvorrichtung nach Anspruch 11 oder 12, **dadurch gekennzeichnet, dass** die Arbeitsfunktion des Fahrzeugs eine hydraulische, eine elektrische und/oder eine pneumatische Funktion aufweist.

14. Bedienvorrichtung nach einem der Ansprüche 1 bis 13, **dadurch gekennzeichnet, dass** die situationsbedingte Anzeige des Anzeigeelements (18) automatisch und/oder manuell mittels eines Umschaltelements (20) umschaltbar ist.

15. Bedienvorrichtung nach einem der Ansprüche 1 bis 14, **dadurch gekennzeichnet, dass** die Anzeigeeinheit (18) mit Symbolen (22, 24) oder Schriftzeichen individuell und/oder bedienerspezifisch belegbar ist und dass vorzugsweise eine solche Belegung abspeicherbar und wieder aufrufbar ist.
